# EUROPEAN PATENT SPECIFICATION

(11) **EP 3 386 321 B1**
(45) Date of publication and mention of the grant of the patent: **27.05.2020**
(21) Application number: 16872527.3
(22) Date of filing: 09.12.2016
(51) Int. Cl.: A23N 5/03, B26D 7/02

(54) **DEVICE FOR CUTTING A COCONUT**
VORRICHTUNG ZUM SCHNEIDEN EINER KOKOSNUSS
DISPOSITIF DE COUPE D'UNE NOIX DE COCO

(30) Priority: 11.12.2015 IN 6653CH2015; 07.12.2016 IN 201641041771
(43) Date of publication of application: 17.10.2018
(73) Proprietor: Pumatik Small Kitchen Appliances Private Limited, Bangalore 560078 (IN)
(72) Inventor: MATTATHIL, Wilson Varghese, Bangalore, Karnataka 560078 (IN)
(74) Representative: Beck Greener LLP
(86) International application number: PCT/IB2016/057485
(87) International publication number: WO 2017/098462

(56) References cited:
- CN-U- 201 830 865
- CN-Y- 2 682 859
- DE-A1- 19 937 191
- US-A- 1 365 396
- US-A- 1 372 293
- US-A- 1 438 714
- US-A- 1 490 493
- US-A- 1 626 361
- US-A1- 2008 178 750

## Description

### TECHNICAL FIELD

This invention relates to a device for cutting a coconut, and in particular, to a device for cutting a coconut into two approximately equal halves with minimal manual input.

### BACKGROUND OF THE DISCLOSURE

Coconut is the fruit of the coconut palm. It is made up of a thick fibrous fruit coat known as the husk, a hard protective endocarp or shell (hereafter called shell) and a fleshy middle layer known as the kernel. While the present invention may be used with both husked and de-husked coconuts, the term "coconut" is generally used herein to refer to a de-husked coconut. The shape of a de-husked coconut varies from elongated oval to almost spherical, with variation in length and width. The coconut has three eyes at one end and a seam running between any two of the eyes to the opposed end. The two opposed ends of the coconut can be considered its "poles" and a line around its circumference equidistant between the poles its "equator". If a cut is made along this "equator" the coconut is cut into two approximately equal halves. However, due to the variability in shape, length and width it is a challenge to cut a coconut to two equal or approximately equal halves.

Currently, domestic methods for cutting a coconut into two halves include hitting the coconut with a heavy knife or hitting the coconut against a hard surface. These methods are manually intensive, inconvenient and not very efficient. They also pose a risk of injury to the user's hands. Furthermore, unless the user is experienced, these methods result in the coconut splitting into two uneven sized pieces such that one piece is very small and one very large, with uneven edges. This makes the coconut difficult to use generally, and in particular, makes the coconut difficult to grate.

Devices for cutting a coconut are known.

CN 204070438 U, for example, describes a coconut cutting machine comprising a frame, a rotatable coconut holder mounted on the frame and a coconut cutting device. In use, a coconut is clamped in the coconut holder and aligned with the coconut cutting device by the user. A motor is used to rotate the coconut as it is cut.

US 2,456,446 describes a coconut peeling machine having an axially-disposed, outwardly-facing, blade-like cutter. The cutter blades have their cutter edges concavely curved so as to serve as fan blades. In use, a coconut is held by the user and engaged with the cutter for peeling.

US 1,438,714 describes a machine for automatically extracting and shredding the meat from a coconut. The machine comprises, *inter alia*, a holder for gripping one end of a coconut, a cooperative holder movable relative to the first holder for gripping the other end of the coconut and a dividing tool for separating the coconut between its ends. In use, a coconut is clamped in the machine by moving the cooperative holder relative to the first holder such as to grip the coconut at each end. A motor is used to rotate the coconut as it is cut.

US 4,350,088 describes a coconut cutter comprising a rotatable coconut holder and a coconut cutting assembly. The coconut cutting assembly comprises a C-shape body that is designed to be secured around the coconut by the user, preferably aligned with its transaxial centre plane. The cutting assembly includes cutting knives that cut the coconut as it is rotated within the cutting assembly by the coconut holder.

A problem with the cutting devices of CN 204070438 U, US 2,456,446, US 1,438,714 and US 4,350,088 however, is that they still require considerable input from user and are not convenient to use. In addition, and in the case of US 2,456,446 and US 4,350,088 especially, the devices pose significant risk of injury to the user.

There is a need therefore to provide an improved device for cutting a coconut.

### SUMMARY OF THE DISCLOSURE

In a first aspect, the invention provides a device for cutting a coconut, the device comprising a support structure; a coconut clasper mounted on the support structure and having a pair of opposed jaws adapted for clasping opposed ends of a coconut, each jaw being rotatable about an axis to permit rotation of a coconut clasped in the jaws; and a cutter mounted on the support structure and positioned for cutting a coconut clasped in the jaws, wherein the device includes a coconut centring mechanism to cause simultaneous movement of the jaws to align the mid-point of a coconut clasped in the jaws with the position of the cutter, such that, in use, the cutter acts at approximately the mid-point of the coconut.

Advantageously, by providing a pair of opposed jaws that permit rotation of a coconut clasped in the jaws, and which are mounted for simultaneous movement by a coconut centring mechanism to align the mid-point of a coconut clasped in the jaws with the position of the cutter, a simple device in accordance with the invention is able to clasp a coconut and cut it into two approximately equal halves with minimal manual input.

The cutter is preferably structured so as to cause rotation of a coconut clasped in the jaws as it acts on the coconut. This may, for example, be achieved with a circular cutting blade. Rotation of the coconut as the cutter acts on it enables the cutter to cut along the entire circumference of the coconut without changing position. Rotation by the cutter also eliminates the need for motorised or manual rotation of the coconut. Alternatively, the coconut may be rotated by means of a manual rotating handle or a motor.

In order to control the rotation of a coconut clasped in the jaws, the cutter may include driving gear as well as cutting blade, the cutting blade being structured and arranged so as to cut through a coconut, and the driving gear being adapted to engage with the surface of a coconut clasped in the jaws such as to cause it to rotate at a predetermined speed. It will be appreciated that controlled rotation of the coconut is important to ensure that the entire circumference of the coconut is cut by the cutter.

In order to prevent loss of the water contained in the coconut as it is cut, the cutter preferably includes adjustable limiting means structured so as to limit the depth that the cutter can cut into a coconut clasped in the jaws. Such limiting means can be configured, for example, to ensure that the kernel of the coconut is not cut through, thus retaining the water in the coconut. Preservation of the kernel structure also means that the coconut can remain securely clasped in the jaws of the coconut clasper, even after the shell is cut through.

To avoid risk of injury to the user, the device of the invention may comprise a cutter guard mounted on the cutter and structured so as to encase at least a cutting edge of the cutter, the cutter guard being movable relative to the cutter so as to permit exposure of the cutting edge when it is brought into contact with a coconut. Preferably, the cutter guard encases the entire blade of the cutter.

The cutter guard may be configured to collect a maximum amount of the dust and debris created when a coconut is cut by the cutter. For example, the cutter guard can be designed to hang vertically lower than the cutting blade, so as to be in the path where dust and debris from the cutting has maximum probability of falling. The cutter guard is preferably detachable from the cutter. This allows easy disposal of the dust and debris and convenient access to the cutting blade.

The cutter may include any commercially available saw blade used for cutting Laminate, Plywood, MDF and Chipboard. Preferably, the cutter has a cutting blade structured so as to pull dust and/or debris out of the cut as it is created during the cutting. This may, for example, be achieved with a Triple Chip Grind (TCG) blade. Such blades are particularly effective at pulling out dust or debris formed when cutting a coconut and expelling the waste along the direction of rotation where it can be collected and giving a smooth edge. If a rough edge (cut shell) is needed a different type of blade could be used.

When small notches or irregularities are required in the cut coconut shell, the cutter may comprise a circular cutting blade having outer cutting teeth and inner marking teeth, the outer cutting teeth being adapted to cut through a coconut, and the inner marking teeth being configured such as to create notches in the shell of the coconut. Different kinds of notches can be made by changing the profile of the inner marking teeth.

In order to minimise manual input, the coconut clasper may include a locking means adapted to reversibly lock the opposed jaws in a clasping position. Preferably, the locking means comprises a ratchet and pawl mechanism to allow controlled and incremental tightening of the opposed jaws.

To return the coconut clasper to a position that can accept a coconut, the coconut clasper may include a release mechanism, resiliently biased such as to cause the opposed jaws to separate. The release mechanism preferably comprises a spring arranged such that it is compressed as the opposed jaws are brought together.

The coconut centring mechanism may comprise a rack and pinion mechanism. When a rack and pinion mechanism is used, simultaneous movement of the opposed jaws is smooth and easily controlled. The opposed jaws may be mounted on the rack and pinion mechanism such that one or both of the jaws is detachable.

To help the user align a coconut in the coconut clasper, the opposed jaws may be shaped such as to permit the opposed ends of a coconut to be visible when the coconut is clasped in the jaws. This may, for example, be achieved using ring-shaped jaws. When ring-shaped jaws are used, the user can align the coconut by centring the poles of the coconut in the middle of the ring.

To prevent a coconut from slipping when it is clasped in the jaws, the opposed jaws may include guide ribs structured and arranged such as to grip the coconut. This prevents the coconut from rotating independently of the jaws. The presence of guide ribs also helps the user to properly align the coconut within the jaws.

In order to securely clasp a coconut in the opposed jaws, the coconut clasper may include urging means adapted to engage with one of the opposed jaws so as to urge the jaw into contact with a coconut clasped in the jaws. This may, for example, be achieved by fixing a spring to each jaw, such that the spring is compressed and in tension when a coconut is clasped in the jaws. This extra urging means ensures that the coconut is clasped tightly while it is being cut, even if any gaps arise due to cutting or realignment of the coconut. This extra urging means can also prevent damage to the coconut clasper due to over-tightening of the jaws.

Preferably, the support structure includes at least one base support roller positioned for supporting a coconut clasped in the jaws of the coconut clasper, the at least one base support roller being rotatable about an axis to aid rotation of a coconut clasped in the jaws, and the coconut clasper is mounted on the support structure between the cutter and the at least one base support roller via a clasper connect, the clasper connect being movable relative to the at least one base support roller and the cutter, such that, in use, the coconut clasper can be positioned such that the approximate mid-point of a coconut clasped in its jaws is supported by the at least one base support roller as the cutter acts at the approximate mid-point of the coconut. This arrangement ensures that a coconut clasped in the jaws of the coconut clasper is supported at its mid-point as it is cut. Preferably, the support structure includes two base support rollers that are positioned such that the weight of the coconut is evenly balanced between them.

### BRIEF DESCRIPTION OF THE ACCOMPANYING DRAWINGS

Preferred embodiments of the invention will be further described with reference to the accompanying figures in which:
Figure 1 is a perspective view of a preferred coconut clasper in accordance with the invention, without its front cover attached.
Figure 2 is a perspective view of the back of the coconut clasper illustrated in Figure 1.
Figure 3 is an exploded view of one of the jaws illustrated in Figures 1 and 2.
Figure 4 is a front view of the coconut clasper illustrated in Figures 1-3, clasping a coconut.
Figure 5 is a sectional view of the coconut clasper illustrated in Figures 1-4, showing the release mechanism.
Figure 6 is a perspective view of the front cover of the coconut clasper illustrated in Figures 1-5.
Figure 7 is a perspective view of the coconut clasper illustrated in Figures 1-6, with its front cover attached.
Figure 8 is a perspective view of a more preferred coconut clasper in accordance with the invention.
Figure 9 is an exploded view of one of the jaws illustrated in Figure 8.
Figure 10 is an enlarged view of one of the jaws illustrated in Figures 8 and 9.
Figure 11 is a perspective view of an alternative coconut clasper in accordance with the invention, clasping a coconut.
Figure 12 is a perspective view of a preferred cutter in accordance with the invention.
Figure 13 is an alternative perspective view of the cutter illustrated in Figure 12.
Figure 14 includes three different perspective views of the second housing gear illustrated in Figures 12 and 13.
Figure 15 includes two enlarged views of part of the cutter assembly illustrated in Figures 12-14, one view with all three frames (left) and one with the external frames removed (right).
Figure 16 is a perspective view of a cutter guard in accordance with the invention.
Figure 17 is a perspective view of part of the cutter assembly illustrated in Figures 12-15 encased in the cutter guard, without the external frames on the cutter.
Figure 18 is a perspective view of part of the cutter assembly illustrated in Figures 12-15 encased in the cutter guard, with the external frames on the cutter.
Figure 19 is a side view of part of the cutter assembly illustrated in Figures 12-15 encased in the cutter guard, aligned with the mid-point of a coconut.
Figure 20 is a side view of part of the cutter assembly illustrated in Figures 12-15 encased in the cutter guard, starting to act on a coconut.
Figure 21 is a side view of part of the cutter assembly illustrated in Figures 12-15 encased in the cutter guard, acting on a coconut and controlling its rotation.
Figure 22 is a side view of part of the cutter assembly illustrated in Figures 12-15 showing how the cutting depth can be predetermined.
Figure 23 is a perspective view of a preferred cutting blade in accordance with the invention.
Figure 24 is a perspective view of a preferred support structure in accordance with the invention.
Figure 25 is a perspective view of the support structure illustrated in Figure 24, with a mounted coconut clasper connector.
Figure 26 is a perspective view of the support structure illustrated in Figure 24, with a mounted cutter.
Figure 27 is a perspective view of the coconut clasper illustrated in Figures 8-10 arranged to be loaded with a coconut.
Figure 28 is a perspective view of a preferred device in accordance with the invention, clasping a coconut.

### DETAILED DESCRIPTION

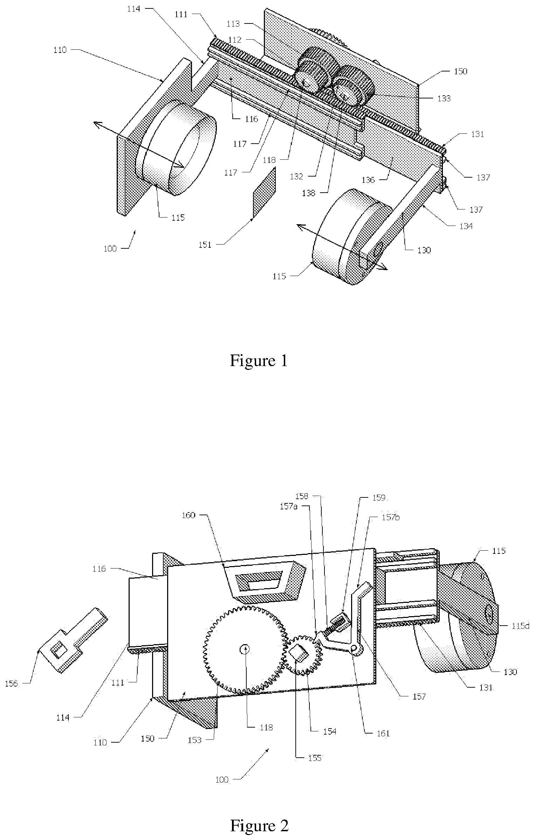

The coconut clasper **100** shown in Figures 1-7 has a pair of opposed jaws **115** mounted on arms **110** and **130.** Each arm **110** and **130** includes a rack **111, 131,** an upper pinion **112, 132,** a lower pinion **113, 133,** a forearm **114, 134,** a back arm **116, 136,** railings **117, 137** and a rod **118, 138.** Both upper pinions **112, 132** and both lower pinions **113, 133** have the same diameter, respectively.

The upper pinion **112, 132** and the lower pinion **113, 133** of each arm **110, 130** are connected together by the rod **118, 138** of the arm to rotate as one. The upper pinion **112, 132** of each arm **110, 130** is also connected to the rack **111, 131** of the arm via geared teeth in a "rack and pinion" type of connection respectively.

The lower pinions **113** and **133** are connected to each other via geared teeth. This connection ensures that, in use, movement of the first arm **110** towards the second arm **130** causes the second arm **130** to move towards the first arm **110** by an equal distance. This means that if an imaginary line is drawn between the pair of opposed jaws **115,** its mid-point will always be same (illustrated in Figure 1 by mid-point **151**). Whether the jaws **115** move towards each other or away from each other therefore, they will always be equidistant from the mid-point **151.**

Accordingly, if an almost geometrically evenly shaped object, like a coconut **10,** is placed between the jaws **115,** the approximate mid-point of this object will coincide with the mid-point **151** of the jaws **115.**

The coconut clasper **100** also includes a back support **150,** through which the rod **118** of the first arm **110** freely passes and is fixed to a first gear **153.** First gear **153** is arranged such that it rotates upon rotation of the upper pinion **112** and the lower pinion **113** of the first arm **110.** A second gear **154** is also provided on the back support **150** and is arranged such as to be rotated by rotation of the first gear **153.** The second gear **154** is associated with a lock lever **157.** The lock lever **157** includes a lock lever gear end **157a** that locks into the teeth of the second gear **154,** a lock lever flat end **157b** that can be depressed to release the lock on the second gear **154,** a lock lever spring **158** to ensure tension in the lock lever **157** and maintain the lock on the second gear **154** and a spring holder **159** to position the lock lever spring **158** optimally. The lock lever **157** rotates about a pivot **161** which is fixed to the back support **150.**

A keyin **155** is fixed to the second gear **154** and a key lever **156** is provided to rotate it such that when key lever **156** is turned, it turns the second gear **154** which in turn rotates the first gear **153** and thereby moves the opposed jaws **115.** The second gear **154** is smaller than the first gear **153** in order to provide more torque to turn using the key lever **156.** This gear ratio also ensures better control in having small incremental movement between the opposed jaws **115** by larger rotation of the second gear **154.** This larger rotation also ensures that larger gear teeth can be used in the second gear **154** for the lock lever gear end **157a** to engage and lock. Key lever **156** can have a gear arrangement inside such that it slips when over-tightened.

A female connector **160** is also provided on the back support **150.**

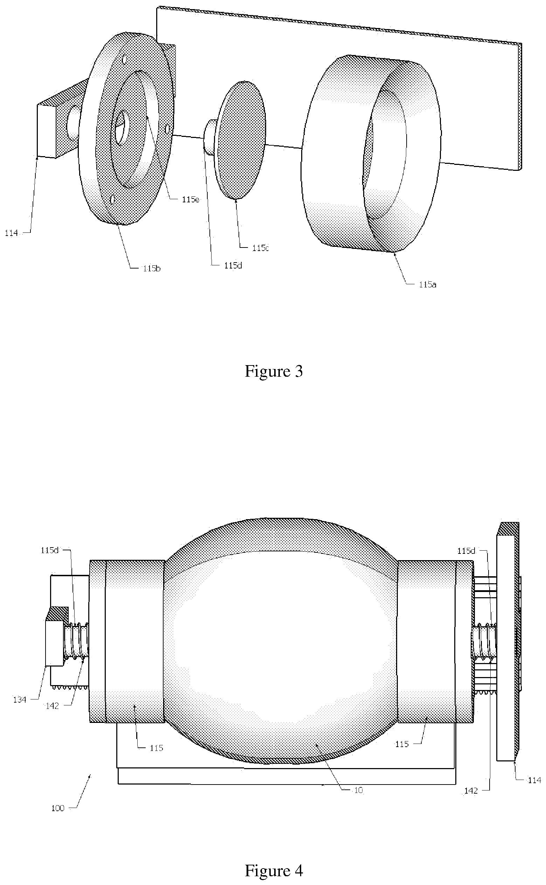

A jaw **115** of this embodiment is shown in Figure 3 to include an outer portion **115a,** a support portion **115b** having a through hole and a plate depression **115e,** and an inner plate **115c.** The inner plate **115c** has an inner rod **115d** formed on its surface. The depth and diameter of plate depression **115e** is higher than the thickness and diameter of the inner plate **115c,** such that the inner plate **115c** can fit inside the plate depression **115e** to rotate freely and move horizontally. If it is required for this rotation to be restricted the inner plate **115** could be made more abrasive, for example, by sticking abrasive material on it, or the diameter of the plate depression **115e** could be decreased to make it a tighter fit. The inner rod **115d** passes freely through the hole in the support portion **115b** and is fixed to the hole in the forearm **114, 134.** This ensures that jaw **115** can rotate freely about forearm **114** and **134** and also move horizontally a little.

Each inner rod **115d** has an urging spring **142** wound around it. The urging spring **142** is arranged between the jaw **115** and the forearm **114, 134** of each arm **110, 130,** such that it is compressed and in tension when a coconut is clasped in the jaws **115.** The inclusion of urging spring **142** ensures that adequate tension or pressure is maintained on the coconut **10** by the jaws **115** while it is being cut and allows for any gaps arising due to cutting or realignment of the coconut. The urging spring **142** also prevents the user from damaging the coconut clasper **100** by over-tightening the keyin **155.**

The coconut clasper **100** has a release mechanism to cause the opposed jaws **115** to separate. The release mechanism includes a release spring **139,** a spring box **141** for housing the release spring **139** and a spring peg **140.** The spring peg **140** is attached to the back arm **136** of the second arm **130** and is configured to block one end of the release spring **139.**

When the opposed jaws **115** are moved towards each other, spring peg **140** pushes on the release spring **139** and compresses it. At the same time, lock lever **157** allows the jaws **115** to move towards each other but prevents them from separating again. From this configuration, the lock on the second gear **154** can be released by depressing the lock lever flat end **157b** to rotate the lock lever **157** about pivot **161** and move the lock lever gear end **157a** out from the teeth of the second gear **154.** When the second gear **154** is unlocked, the release spring **139** decompresses pushing the spring peg **140** and the back arm **136** outward. This results in the opposed jaws **115** moving away from each other automatically. When pressure on lock lever flat end **157b** is removed the lock lever gear end **157a** reverts back to locking the second gear **154** due to the tension in lock lever spring **158.**

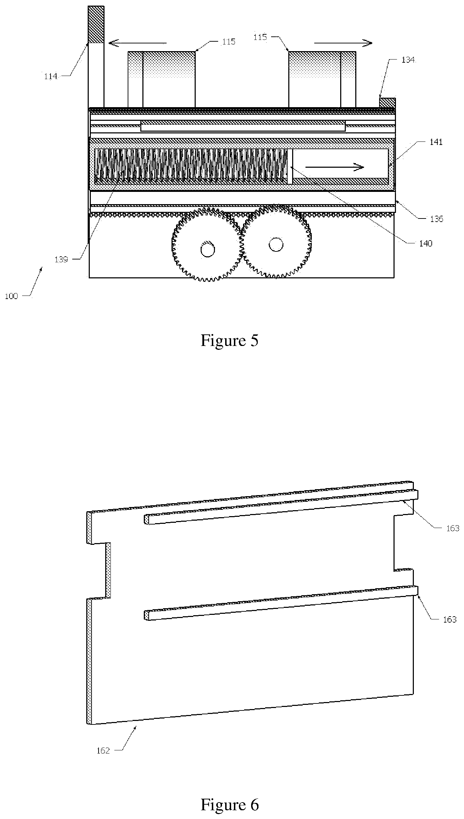

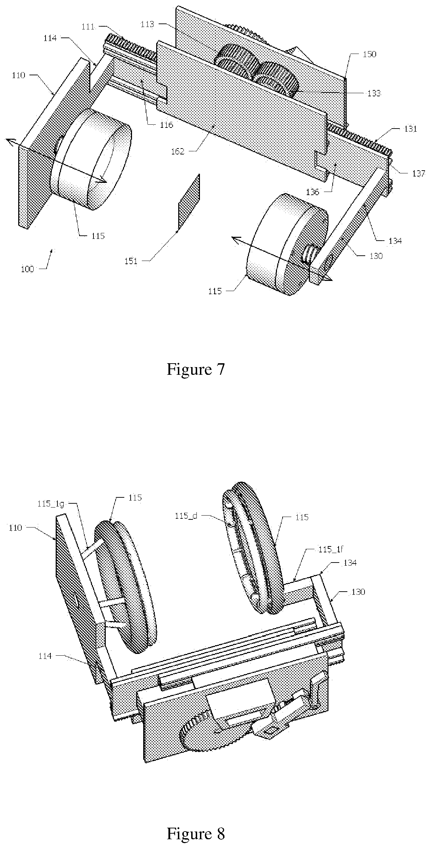

As shown in Figures 6 and 7, the coconut clasper **100** has a front cover **162** with railing supports **163.** The front cover **162** is used as the front cover over the back arms **116** and **136.** Railing supports **163** interlink with the railings **117** on the first arm **110** such that back arms **116** and **136** move horizontally and smoothly.

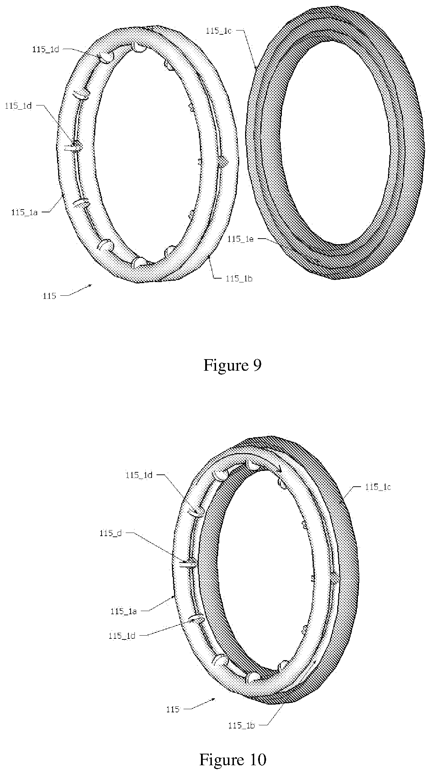

The coconut clasper **100** shown in Figures 8-10 has a pair of opposed jaws **115** with a clasping ring **115_1a** and a bearing ring **115_1b**. Clasping ring **115_1a** has several guide ribs **115_1d** formed on it that help to guide a coconut **10** into it. Bearing outer **115_1c** has bearing depression **115_1e** which is a smooth hollow with an inner diameter slightly more than the diameter of bearing ring **115_1b**. Bearing ring **115_1b** fits into bearing depression **115_1e** such that the clasping ring **115_1a** can smoothly rotate (as shown by arrow about bearing outer **115_1c)**. The jaws **115** can be fitted onto forearms **114** and **134** through connection with the bearing outer **115_1c**, e.g., through connection **115_1g** or connection **115_1f.** This embodiment enables the user to see the opposed ends of a coconut **10** while its held in the coconut clasper **100** thereby enabling the user to align the coconut **10** properly.

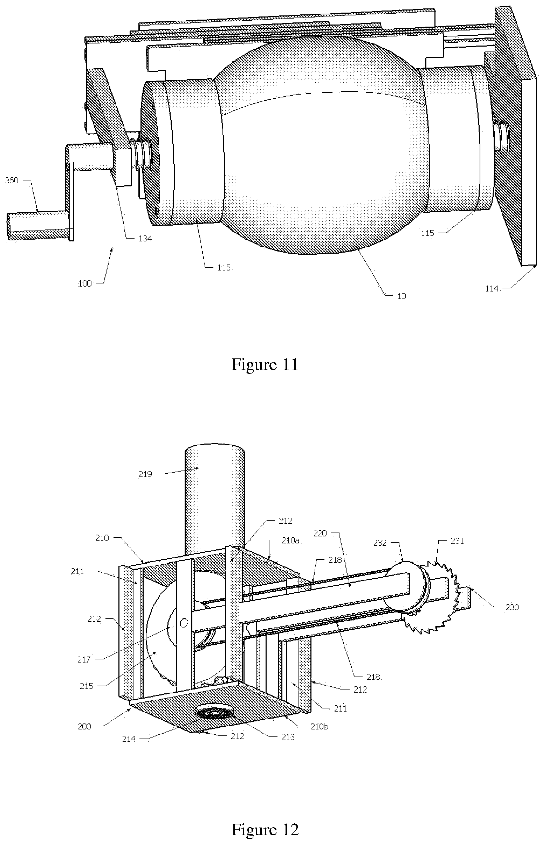

The coconut clasper **100** shown in Figure 11 has a manual turner **360**. The manual turner **360** can be used to turn the jaw **115** of the second arm **130** which in turn rotates the coconut **10** and the jaw **115** of the first arm **110**.

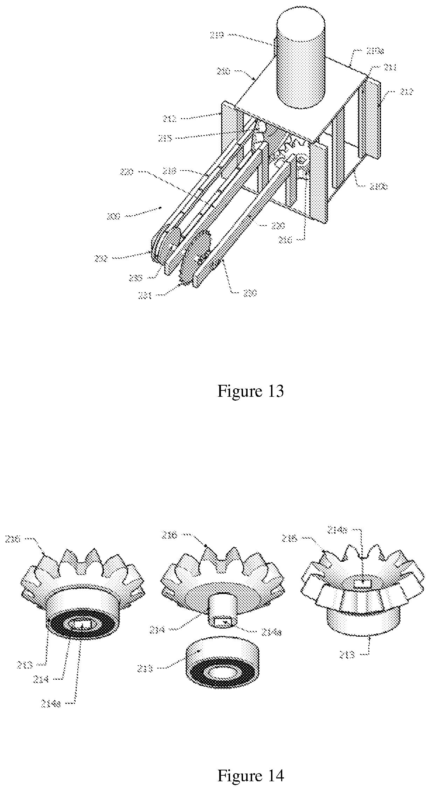

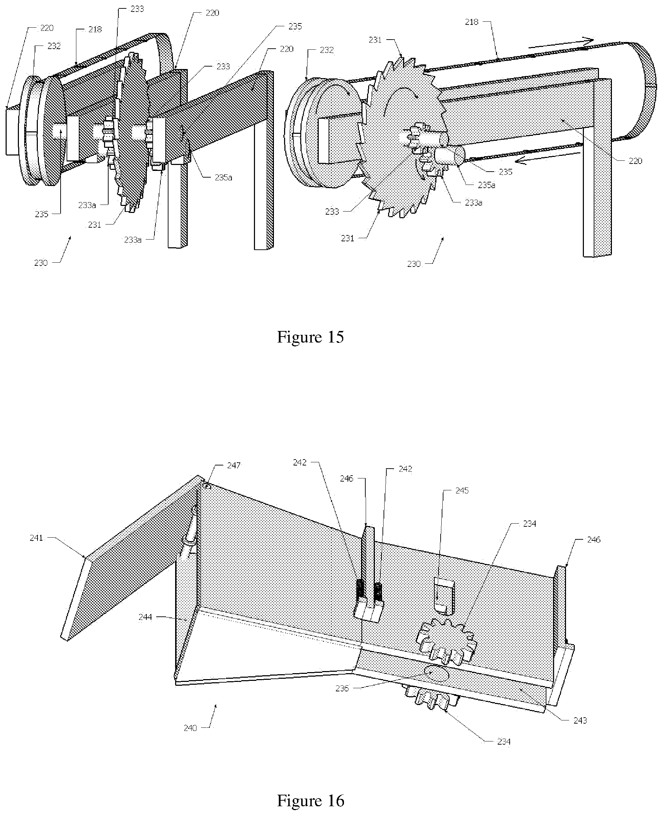

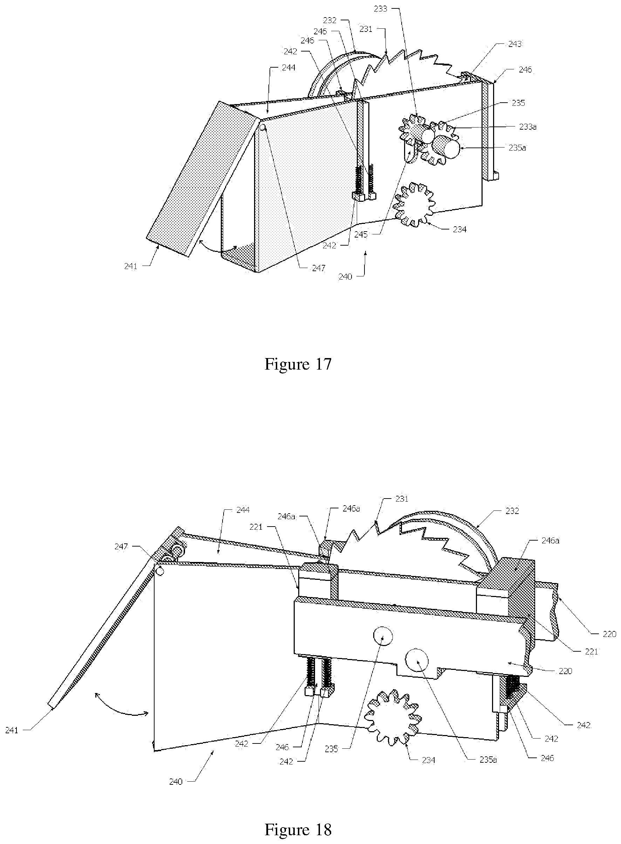

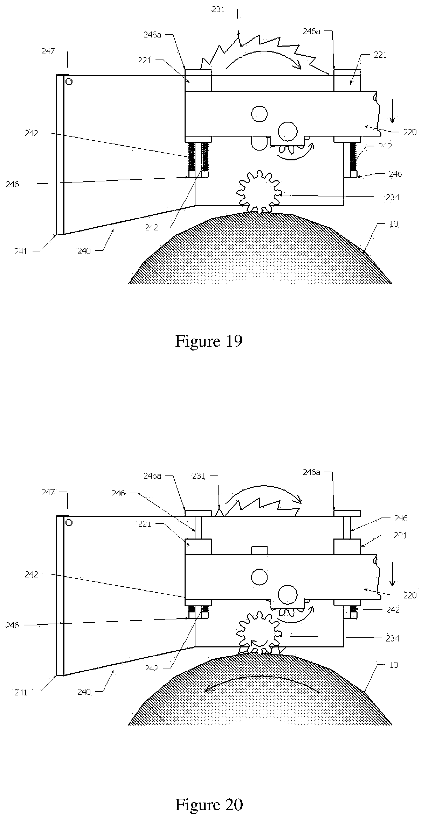

The cutter **200** shown in Figures 12-22 has a gear housing **210** and cutter assembly **230**. The gear housing **210** includes a top housing ceiling **210a** and a bottom housing floor **210b** supported by a gear housing pane **211** and a gear housing pane slider **212.** Gear housing **210** also includes a housing bearing **213** that tightly fits to the housing floor **210b,** a first housing gear **215** that is connected by gear teeth to a second housing gear **216,** a housing pulley **217** that is fixed to the second housing gear **216,** a pulley belt **218** that is connected to the housing pulley **217,** a plunger **219** that is attached to the housing ceiling **210a** and frames **220.**

The cutter assembly **230** includes a cutting blade **231** that is attached to a first cutter connecting rod **235** and used to cut the shell of coconut **10,** a cutter pulley **232** that is connected to the housing pulley **217** through the pulley belt **218,** a first cutter gear **233** that is attached to the first cutter connecting rod **235** and connected through gear teeth to a second cutter gear **233a** and a second cutter connecting rod **235a.**

The second housing gear **216** has a housing bearing inner **214** formed on its surface. A hole, i.e., the housing bearing inner hole **214a,** passes through the housing bearing inner **214** and the second housing gear **216.** The inner ring of the housing bearing **213** is fitted tightly with housing bearing inner **214.**

The cutting blade **231,** cutter pulley **232** and first cutter gear **233** are tightly fitted to the first cutter connecting rod **235** such that they all rotate together about the first cutter connecting rod **235.** Similarly, the second cutter gear **233a** is tightly fitted to the second cutter connecting rod **235a** such that they rotate together. The first and second cutter connecting rods **235** and **235a** pass freely through frames **220.** The first and second cutter connecting rods **235** and **235a** are connected through gear teeth such that when the cutter pulley **232** rotates clockwise cutting blade **231** also rotates clockwise while the first cutter gear **233a** rotates anticlockwise. Accordingly, the connection between the second housing gear **216** and the second cutter gear **233a** is such that when the second housing gear **216** is rotated in the horizontal plane, it makes the cutting blade **231** and the second cutter gear **233a** rotate in the vertical plane.

Cutter pulley **232,** housing pulley **217** and pulley belt **218** could be replaced by suitable gears. The objective simply being to transfer rotational power from the second housing gear **216** to the cutting blade **231.**

The cutter **200** has a cutter guard **240** which is used for safety purposes. The cutter guard **240** includes a cutter guard dust collector **244** for collecting any debris or dust created when cutting a coconut shell, a cutter guard door **241** that can be used to access the cutter guard dust collector **244,** a cutter guard blade space **243** for encasing the cutting blade **231,** cutter guard springs **242,** cutter guard rod space **245,** cutter guard sliders **246,** cutter guard door rod **247** and a driving gear **234.** The driving gear **234** is fixed tightly to a cutter gear driving rod **236,** which is then loosely fitted to either side of the cutter guard **240.** This enables the driving gear **234** to rotate freely about the cutter guard **240.**

The cutting blade **231** is placed inside the cutter guard blade space **243** and the first cutter connecting rod **235** passes through the cutter guard rod space **245.** A slider frame **221** is secured to frames **220** and cutter guard sliders **246** slide inside slider frame **221.** Guard slider blockers **246a** are fixed to the top of the cutter guard sliders **246** to ensure that the cutter guard sliders **246** remain inside the slider frame **221** while being able to slide vertically up and down.

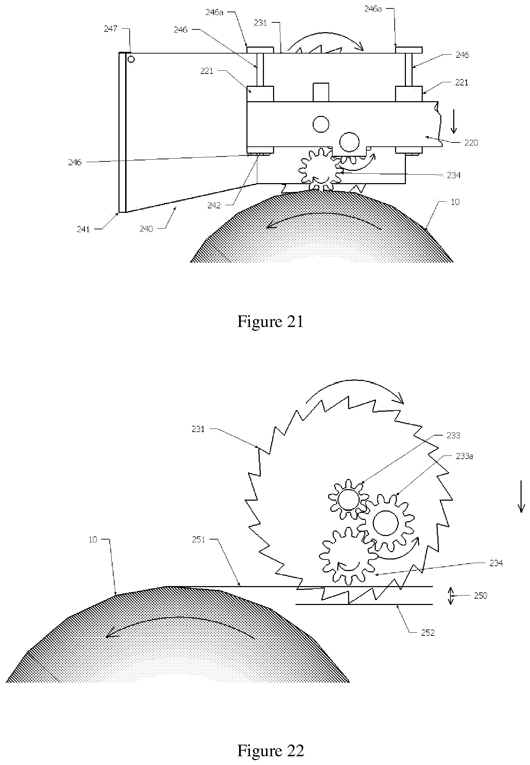

In use, the cutter **200** is placed above a coconut **10** and frames **220** are progressively pressed downward. The driving gear **234** is first to make contact with the coconut **10** while the cutting blade **231** remains encased in the cutter guard **240,** rotating at a speed suitable to cut the coconut **10.** As the cutter **200** is pushed further downwards the cutter guard **240** abuts the coconut and is prevented from moving any further. The cutter assembly **230,** aided by the slider frame **221** sliding through the cutter guard sliders **246,** continues to move downwards until it contacts the coconut **10.** When the cutting blade **231** touches the coconut **10** at high speed there is a significant difference in speed between the teeth of the cutting blade **231** and the coconut shell. There is also in inertia for the coconut **10** to speed up rotation to catch up with the cutting blade **231.** This results in slippage or a difference in speed between the cutting blade **231** and the coconut **10.** This slippage aids in the coconut **10** being cut. Depending on the speed of rotation of the cutting blade **231** the slippage can be increased or decreased by making the opposed jaws **115** of the coconut clasper **100** more or less free to rotate. Contact with the rotating coconut **10** causes the driving gear **234** to rotate, thereby avoiding any unwanted restistance on the rotating coconut **10.** As the cutter **200** moves further downward the cutting blade **231** makes a deeper cut and rotation of the coconut **10** becomes uneven as the cut becomes larger. When the cut in the coconut **10** becomes large enough, and cuts through the shell, the cutting blade **231** begins to cut a part of the soft coconut-meat. At this point the second cutter gear **233a,** which rotates and also moves down along with the cutting blade **231,** engages with the driving gear **234** causing driving gear **234** to start rotating it in the direction of the cutting blade **231.** At this point, the driving gear **234,** which presses against the surface of the coconut **10,** and rotates at a much lower speed, blocks the second cutter gear **233a** along with the cutting blade **231** from moving further downwards. The driving gear **234** presses hard against the surface of the coonut such as to cause it to rotate at a very low speed while the cutting blade **231** continues to rotate at high speed. This ensures the circumference around the coconut **10** is cut at its equator. The depth to which the cutting blade **231** can cut a coconut **10** is called the cutting depth **250** and is the difference between the lowest point of the cutting blade **231,** defined as the cut lower **252,** and the driving gear **234,** defined as the cut upper **251.** The depth of cutting can be predetermined as illustrated in Figure 22.

Because the driving gear **234** is already rotating when it engages with the second cutter gear **233a** damage to the gear teeth is minimal. The gear ratio between the first cutter gear **233,** the second cutter gear **233a** and the driving gear **234** is chosen such that a) the speed of the driving gear **234** is around 300 rpm and b) the speed difference between the second cutter gear **233a** and the driving gear **234** is not much. The driving gear **234** does not cut the shell of the coconut **10** as it is thick and not designed to cut. The speed of rotation is also very low such that it enables the coconut **10** to rotate but not cut.

Once the coconut **10** is cut and the downward pressure on the frame **220** is removed, the cutting blade **231** along with the cutter assembly **230** moves up and the cutter guard **240** once again encases the cutting blade **231** due to the spring action of cutter guard springs **242.**

Two driving gears **234** can be used on each side of the cutter guard **240** meaning there are four driving wheels in total. This ensures better balance when pressing the cutter guard **240** against the coconut **10.**

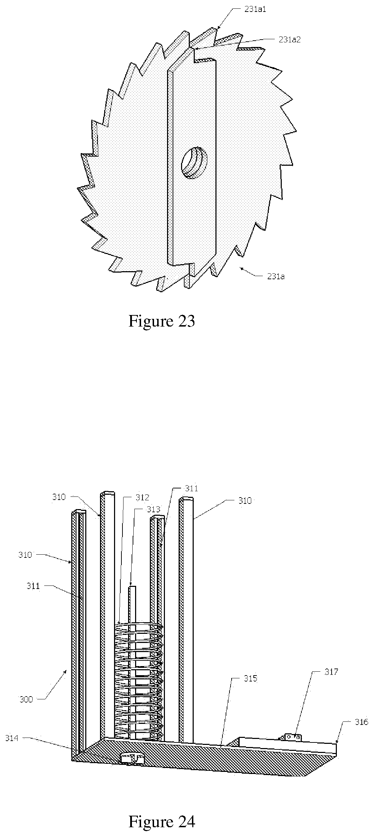

The cutting blade **231a** shown in Figure 23 is an alternate version of cutting blade **231,** which includes outer cutting teeth **231a1** and inner marking teeth **231a2.** The inner marking teeth **231a2** are on both faces of the cutting blade **231a.** When this cutting blade **231a** is used to cut into a coconut **10,** and if the inner marking teeth **231a2** are limited to penetrate only to the depth of the coconut shell or less, it results in notches being made on coconut shell. Different kinds of notches can be made by changing the profile of inner marking teeth **231a2.**

The support structure **300** shown in Figures 24-25 has four pillars **310** each with a pillar groove **311,** a cutter spring **312** and a rotational rod **313** connected to a coupler **314.** When the coupler **314** is connected to a rotational force it rotates the rotational rod **313.** The support structure **300** also includes a base plate **315** that acts as a support for the water collector **316** and base support **317** that has two base support rollers **318.** The support structure **300** around the clasper **100** may be enclosed in a protective cover (which is optionally transparent).

The coconut clasper **100** mounts on the support structure **300** via clasper connect **330** which has a clasper connect base plate **331,** a male connector **332** and a connector lock that is a ball which can be depressed as it has a spring inside like in normal hand tools. The clasper connect **330** fits into two of the pillars **310** of the support structure **300.** Here the edges of the clasper connect base plate **331** fit freely into the pillar grooves **311** such that it can easily slide up and down.

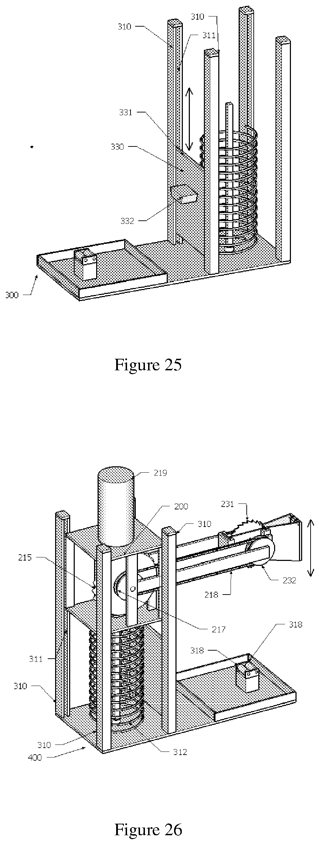

As shown in Figure 26, the cutter **200** is mounted on the support structure **300** such that the gear housing pane sliders **212** fit freely into the pillar grooves **311** of pillars **310.** When mounted in this way, the cutter **200** can slide vertically up and down within the pillars **310.** This arrangement also ensures that the rotational rod **313** passes freely through the housing bearing inner hole **214a** of the second housing gear **216,** such that when the rotational rod **313** is rotating, the second housing gear **216** can freely move up and down as well as rotate. Accordingly, when coupler **314** is connected to a rotational force, it rotates the rotational rod **313,** which in turn rotates the second housing gear **216,** which in turn rotates the first housing gear **215,** which in turn rotates the housing pulley **217,** which in turn rotates the cutter pulley **232,** which in turn rotates the cutting blade **231** such that it can cut through the shell of a coconut **10.**

The lower-most tip of the cutting blade **231** is vertically above the gap between the two base support rollers **318.** This is required to have optimum force distribution when the cutting blade **231** is pressed against the coconut **10.** Alternatively, the lower-most tip of the cutting blade **231** can be slightly ahead or slightly behind along the "Y" Axis. The cutter **200** can be pushed down by applying downward pressure by hand using a plunger **219** resulting in compression of the cutter spring **312.** When this downwards pressure is removed, the cutter **200** moves upwards due to the release in tension in cutter spring **312.**

A method of using the device of the invention will now be described.

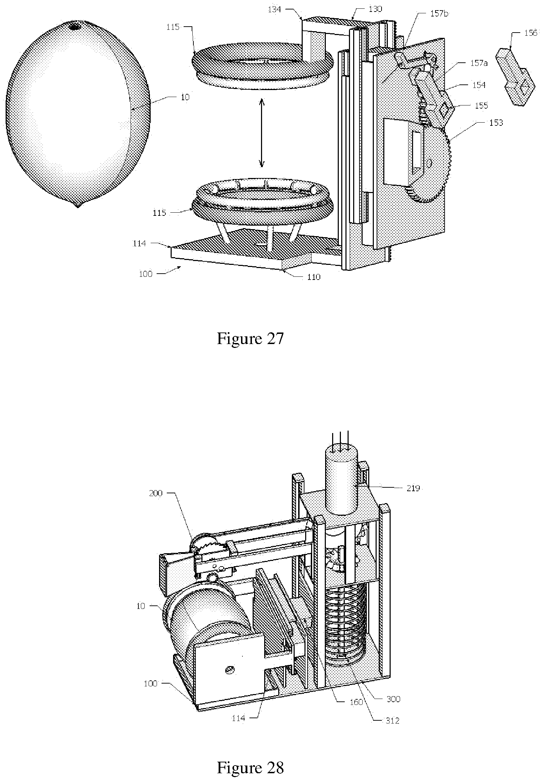

As shown in Figure 27, to load a coconut **10** into the coconut clasper **100** the clasper is placed vertically with the large flat surface of forearm **114** as the base. In order to load coconut **10** into the coconut clasper **100** easily, the two jaws **115** need to be separated wider than the length of the coconut **10.** This is achieved by pressing or applying pressure on lock lever flat end **157b** to release the lock lever gear end **157a** from the second gear **154.** This results in the jaws **115** being free to move outward, which happens automatically due to the release spring **139** decompressing. The design of the jaws **115** enables easy visual inspection of the coconut **10** from top. This helps the user to align the coconut **10** correctly such that the pole aligns to the center of the jaw 115. The guide ribs **115_1d** also aids in seating the coconut **10** vertically when pressed by the jaws **115** from either side. Vertically downward pressure is applied on forearm **134** such that coconut **10** is tightly held between both jaws **115.** Due to the arrangement of the rack **111,** the upper pinion **112** and the lower pinion **113** of forearm **114** and its connection to the lower pinion **133,** the upper pinion **132** and the rack **131** of forearm **134,** as forearm **134** moves downward, forearm **114** moves an equal distance upward (i.e., relative to forearm **134**) . This results in coconut **10** being held between both jaws **115** such that the imaginary equator of coconut **10** approximately coincides with the mid-point between both jaws **115.** Key lever **156** is used to rotate keyin **155** to further bring the two jaws **115** closer in order to further tighten the hold on the coconut **10.**

As shown in figure 28, once loaded with a coconut **10,** the coconut clasper **100** is mounted to the support structure **300** by interaction of the male connector **332** on the clasper connect **330** with the female connector **160** on the coconut clasper **100.** The connector lock of the male connector will help in locking this. The clasper connect **330** can go vertically up or down to aid easy connection. The alignment of the male and female connectors **332, 160** is such that when the coconut clasper **100** is mounted onto the support structure **300,** the cutting blade **231** will correctly align to the mid-point of the distance between the two jaws **115.** In addition, the coconut **10** of variable width will sit on the two base support rollers **318** such that its weight is almost evenly balanced.

In order to cut the coconut **10** the cutting blade **231** needs to rotate at the optimum speed. This is achieved by starting the rotational power source (not shown in figure). The cutter **200** is then lowered towards the coconut **10** by applying vertically downward pressure (for example, by hand) on the plunger **219.** When the cutter **200** moves downward the cutter spring **312** gets compressed. The rotating cutting blade **231** cuts the shell of coconut **10** and causes it to rotate slightly. The blade **231** goes downward until the driving gear **234** touches the shell of the coconut **10.** As driving gear **234** rotates the coconut **10,** it ensures that the circumference around the coconut **10** is cut at the equator. The depth to which the coconut **10** needs to be cut can be decided by the vertical height difference between lowest point of the cutting blade **231** and the driving gear **234.** It is ideal to keep this depth a little more than shell thickness of coconut **10** and such that the kernel of coconut **10** is not fully cut open. This ensures that water does not come out of coconut **10.** Incase water comes out it will collect in the water collector **316.** Base support **317** and base support rollers **318** are placed vertically below the cutting blade **231** so that the maximum vertical pressure which the cutting blade **231** exerts on the coconut **10** goes to the base support rollers **318** and base support **317.** The rollers also aid in rotation. This ensures that there is not too much pressure on forearms 114 and 134 of the coconut clasper **100.**

After cutting, the pressure on plunger **219** is removed, and due to the release in tension in cutter spring **312,** the cutter **200** is moved vertically upwards. The coconut clasper **100** along with the clasped coconut **10** is unloaded from the support structure **300** and again placed vertically. Lock lever flat end **157b** is pressed in to release the lock on outward movement of the jaws **115.** The jaws **115** move away from each other and the cut coconut **10** removed. If the kernel is still intact, the coconut can be placed in a bowl and to cut through with a normal knife to get two halves of the coconut **10** and the coconut water collected in a bowl.

### List of Reference Numerals:

- 10:: coconut
- 100:: coconut clasper
- 110:: arm
- 111:: rack
- 112:: upper pinion
- 113:: lower pinion
- 114:: forearm
- 115:: jaw
- 115a:: outer portion
- 115b:: support portion
- 115c:: inner plate
- 115d:: inner rod
- 115e:: plate depression
- 115_1a:: clasping ring
- 115_1b:: bearing ring
- 115_1c:: Bearing outer
- 115_1d:: guide ribs
- 115_1e:: bearing depression
- 115_1f:: connection
- 115_1g:: connection
- 116:: back arm
- 117:: railings
- 118:: rod
- 130:: arm
- 131:: rack
- 132:: upper pinion
- 133:: lower pinion
- 134:: forearm
- 136:: back arm
- 137:: railings
- 138:: rod
- 139:: release spring
- 140:: spring peg
- 141:: spring box
- 142:: urging spring
- 150:: back support
- 151:: mid-point
- 153:: first gear
- 154:: second gear
- 155:: keyin
- 156:: key lever
- 157:: lock lever
- 157a:: lock lever gear end
- 157b:: lock lever flat end
- 158:: lock lever spring
- 159:: spring holder
- 160:: female connector
- 161:: pivot
- 162:: front cover
- 163:: Railing support
- 200:: cutter
- 210:: gear housing
- 210a: housing ceiling
- 210b: housing floor
- 211:: gear housing pane
- 212:: gear housing pane slider
- 213:: housing bearing
- 214:: housing bearing inner
- 214a:: housing bearing inner hole
- 215:: first housing gear
- 216:: second housing gear
- 217:: housing pulley
- 218:: pulley belt
- 219:: plunger
- 220:: frames
- 221:: slider frame
- 230:: cutter assembly
- 231:: cutting Blade
- 231a:: Cutting Blade
- 231a1:: outer cutting teeth
- 231a2:: inner marking teeth
- 232:: cutter pulley
- 233:: first cutter gear
- 233a:: second cutter gear
- 234:: driving gear
- 235:: first cutter connecting rod
- 235a:: second cutter connecting rod
- 236:: cutter gear driving rod
- 240:: cutter guard
- 241:: cutter guard door
- 242:: cutter guard springs
- 243:: cutter guard blade space
- 244:: cutter guard dust collector
- 245:: cutter guard rod space
- 246:: cutter guard sliders
- 246a:: Guard slider blockers
- 247:: cutter guard door rod
- 250:: cutting depth
- 251:: cut upper
- 252:: cut lower
- 300:: support structure
- 310:: pillars
- 311:: pillar groove
- 312:: cutter spring
- 313:: rotational rod
- 314:: coupler
- 315:: baseplate
- 316:: water collector
- 317:: base support
- 318:: base support rollers
- 330:: clasper connect
- 331:: clasper connect base plate
- 332:: male connector
- 333:: connector lock
- 360:: manual turner

## Claims

1. A device for cutting a coconut (10), the device comprising:
a support structure (300);
a coconut clasper (100) mounted on the support structure (300) and having a pair of opposed jaws (115) adapted for clasping opposed ends of a coconut (10), each jaw being rotatable about an axis to permit rotation of a coconut (10) clasped in the opposed jaws (115); and
a cutter (200) mounted on the support structure (300) and positioned for cutting a coconut (10) clasped in the opposed jaws (115),
**characterized in that** the device includes a coconut centring mechanism to cause simultaneous movement of the opposed jaws (115) to align the mid-point (151) of a coconut (10) clasped in the pair of opposed jaws (115) with the position of the cutter (200), such that, in use, the cutter (200) acts at approximately the mid-point (151) of the coconut (10).

2. A device as claimed in Claim 1, wherein the cutter (200) is structured so as to cause rotation of a coconut (10) clasped in the pair of opposed jaws (115) of the coconut clasper (100) as it acts on the coconut (10).

3. A device as claimed in Claim 2, wherein the cutter (200) includes a cutting blade (231) and a driving gear (234), the cutting blade (231) being structured and arranged so as to cut through a coconut (10), and the driving gear (234) being adapted to engage with the surface of a coconut (10) clasped in the pair of opposed jaws (115) such as to control rotation of the coconut (10).

4. A device as claimed in any preceding claim, wherein the cutter (200) includes adjustable limiting means, the limiting means being structured so as to limit the depth that the cutter (200) can cut into a coconut (10) clasped in the pair of opposed jaws (115), such that the kernel of the coconut (10) is not cut through and water remains in the coconut (10).

5. A device as claimed in any preceding claim, further comprising a cutter guard (240) mounted on the cutter (200) and structured so as to encase at least a cutting edge of the cutter (200), the cutter guard (240) being movable relative to the cutter (200) so as to permit exposure of the cutting edge when it is brought into contact with a coconut (10) clasped in the pair of opposed jaws (115).

6. A device as claimed in Claim 5, wherein the cutter guard (240) is detachable from the cutter (200) and/or is configured to collect dust and debris created when a coconut (10) is cut.

7. A device as claimed in any preceding claim, wherein the cutter (200) has a cutting blade (231) structured so as to pull dust and/or debris out of a cut as it is created during cutting.

8. A device as claimed in any preceding claim, wherein the cutter (200) comprises a rotating disk having outer cutting teeth (231al) and inner marking teeth (231a2), the outer cutting teeth (231a1) being adapted to cut through a coconut (10), and the inner marking teeth (231a2) being configured such as to create notches in the shell of a coconut 10.

9. A device as claimed in any preceding claim, wherein the coconut clasper (100) includes a locking means adapted to reversibly lock the opposed jaws (115) in a clasping position, and the locking means optionally comprises a ratchet and pawl mechanism.

10. A device as claimed in any preceding claim, wherein the coconut clasper (100) includes a release mechanism, resiliently biased such as to cause the opposed jaws (115) to separate, and/or, the coconut centring mechanism comprises a rack and pinion mechanism.

11. A device as claimed in any preceding claim, wherein the opposed jaws (115) are shaped such as to permit the opposed ends of a coconut (10) to be visible when the coconut (10) is clasped in the pair of opposed jaws (115).

12. A device as claimed in any preceding claim, wherein the opposed jaws (115) include guide ribs (115_ld) structured and arranged such as to prevent slipping of a coconut (10) clasped in the pair of opposed jaws (115) and to aid alignment of a coconut (10) within the pair of opposed jaws (115).

13. A device as claimed in any preceding claim, wherein the coconut clasper (100) includes urging means adapted to engage with one of the opposed jaws (115) so as to urge the jaw into contact with a coconut (10) clasped in the pair of opposed jaws (115).

14. A device as claimed in any preceding claim, wherein the support structure (300) includes at least one base support roller (318) positioned for supporting a coconut (10) clasped in the opposed jaws (115) of the coconut clasper (100), the at least one base support roller (318) being rotatable about an axis to aid rotation of a coconut (10) clasped in the pair of opposed jaws (115); and the coconut clasper (100) is mounted on the support structure (300) between the cutter (200) and the at least one base support roller (318) via a clasper connect (330), the clasper connect (330) being movable relative to the at least one base support roller (318) and the cutter (200), such that, in use, the coconut clasper (100) is positioned such that the approximate mid-point of a coconut (10) clasped in its jaws (115) is supported by the at least one base support roller (318) as the cutter (200) acts at the approximate mid-point (151) of the coconut (10).

15. A device as claimed in any preceding claim, comprising a rotational rod (313), connected at one end to a coupler (314) and at the other end to a second housing gear (216), such that the second housing gear (216) is rotated by the rotational rod (313) and moves along the rotational rod (313) linearly.

## Patentansprüche

1. Vorrichtung zum Schneiden einer Kokosnuss (10), wobei die Vorrichtung Folgendes umfasst:
eine Stützstruktur (300);
eine Kokosnusshalterung (100), die an der Stützstruktur (300) angebracht ist und ein Paar gegenüberliegender Backen (115) aufweist, die zum Halten gegenüberliegender Enden einer Kokosnuss (10) eingerichtet sind, wobei jede Backe um eine Achse drehbar ist, um eine Drehung einer Kokosnuss (10) zu ermöglichen, die in den gegenüberliegenden Backen (115) gehalten wird; und
eine Schneideeinrichtung (200), die an der Stützstruktur (300) angebracht und zum Schneiden einer Kokosnuss (10) positioniert ist, die in den gegenüberliegenden Backen (115) gehalten wird, **dadurch gekennzeichnet, dass**
die Vorrichtung einen Kokosnuss-Zentriermechanismus beinhaltet, um eine gleichzeitige Bewegung der gegenüberliegenden Backen (115) zu bewirken, um den Mittelpunkt (151) einer Kokosnuss (10), die in dem Paar gegenüberliegender Backen (115) gehalten wird, mit der Position der Schneideeinrichtung (200) derart auszurichten, dass die Schneideeinrichtung (200) im Gebrauch ungefähr in der Mitte (151) der Kokosnuss (10) wirkt.

2. Vorrichtung nach Anspruch 1, wobei die Schneideeinrichtung (200) derart strukturiert ist, dass sie eine Drehung einer Kokosnuss (10) bewirkt, die in dem Paar gegenüberliegender Backen (115) der Kokosnusshalterung (100) gehalten wird, während sie auf die Kokosnuss (10) einwirkt.

3. Vorrichtung nach Anspruch 2, wobei die Schneideeinrichtung (200) eine Schneidklinge (231) und ein Antriebszahnrad (234) beinhaltet, wobei die Schneidklinge (231) derart strukturiert und angeordnet ist, um durch eine Kokosnuss (10) zu schneiden, und das Antriebszahnrad (234) dazu eingerichtet ist, mit der Oberfläche einer Kokosnuss (10), die in dem Paar gegenüberliegender Backen (115) gehalten wird, in Eingriff zu gelangen, um eine Drehung der Kokosnuss (10) zu steuern.

4. Vorrichtung nach einem der vorhergehenden Ansprüche, wobei die Schneideeinrichtung (200) einstellbare Begrenzungsmittel beinhaltet, wobei die Begrenzungsmittel derart strukturiert sind, dass die Tiefe begrenzt wird, welche die Schneideeinrichtung (200) in eine Kokosnuss (10), die in dem Paar gegenüberliegender Backen (115) gehalten wird, schneiden kann, sodass der Kern der Kokosnuss (10) nicht durchgeschnitten wird und Wasser in der Kokosnuss (10) verbleibt.

5. Vorrichtung nach einem der vorhergehenden Ansprüche, die ferner einen Schneideeinrichtungsschutz (240) umfasst, der auf der Schneideeinrichtung (200) derart angebracht und strukturiert ist, um mindestens eine Schneidkante der Schneideeinrichtung (200) zu umhüllen, wobei der Schneideeinrichtungsschutz (240) relativ zu der Schneideeinrichtung (200) bewegbar ist, um ein Freilegen der Schneidkante zu ermöglichen, wenn diese mit einer Kokosnuss (10) in Kontakt gebracht wird, die in dem Paar gegenüberliegender Backen (115) gehalten wird.

6. Vorrichtung nach Anspruch 5, wobei der Schneideeinrichtungsschutz (240) von der Schneideeinrichtung (200) abnehmbar ist und/oder dazu ausgestaltet ist, Staub und Schmutz zu sammeln, die anfallen, wenn eine Kokosnuss (10) geschnitten wird.

7. Vorrichtung nach einem der vorhergehenden Ansprüche, wobei die Schneideeinrichtung (200) eine Schneidklinge (231) aufweist, die dazu strukturiert ist, Staub und/oder Schmutz aus einem Schnitt herauszunehmen, wenn dieser während des Schneidens erzeugt wird.

8. Vorrichtung nach einem der vorhergehenden Ansprüche, wobei die Schneideeinrichtung (200) eine rotierende Scheibe umfasst, die äußere Schneidzähne (231a1) und der innere Markierungszähne (231a2) aufweist, wobei die äußeren Schneidzähne (231a1) dazu eingerichtet sind, durch eine Kokosnuss (10) zu schneiden, und die inneren Markierungszähne (231a2) dazu ausgestaltet sind, Kerben in der Schale einer Kokosnuss 10 zu erzeugen.

9. Vorrichtung nach einem der vorhergehenden Ansprüche, wobei die Kokosnusshalterung (100) ein Verriegelungsmittel beinhaltet, das dazu eingerichtet ist, die gegenüberliegenden Backen (115) reversibel in einer Halteposition zu verriegeln und das Verriegelungsmittel wahlweise einen Ratschen- und Klinkenmechanismus umfasst.

10. Vorrichtung nach einem der vorhergehenden Ansprüche, wobei die Kokosnusshalterung (100) einen Freigabemechanismus beinhaltet, der derart elastisch vorgespannt ist, um die gegenüberliegenden Backen (115) zu veranlassen, sich zu trennen, und/oder der Kokosnuss-Zentriermechanismus einen Zahnstangen- und Ritzelmechanismus umfasst.

11. Vorrichtung nach einem der vorhergehenden Ansprüche, wobei die gegenüberliegenden Backen (115) derart geformt sind, dass die gegenüberliegenden Enden einer Kokosnuss (10) sichtbar sind, wenn die Kokosnuss (10) in dem Paar gegenüberliegender Backen (115) gehalten wird.

12. Vorrichtung nach einem der vorhergehenden Ansprüche, wobei die gegenüberliegenden Backen (115) Führungsrippen (115_1d) beinhalten, die derart strukturiert und angeordnet sind, um ein Abrutschen einer Kokosnuss (10) zu verhindern, die in dem Paar gegenüberliegender Backen (115) gehalten wird und um eine Ausrichtung einer Kokosnuss (10) innerhalb des Paares gegenüberliegender Backen (115) zu unterstützen.

13. Vorrichtung nach einem der vorhergehenden Ansprüche, wobei die Kokosnusshalterung (100) Drückmittel umfasst, die eingerichtet sind, mit einer der gegenüberliegenden Backen (115) in Eingriff zu gelangen, um die Backe in Kontakt mit einer Kokosnuss (10) zu drücken, die in dem Paar gegenüberliegender Backen (115) gehalten ist.

14. Vorrichtung nach einem der vorhergehenden Ansprüche, wobei
die Stützstruktur (300) mindestens eine Basisstützwalze (318) beinhaltet, die zum Stützen einer Kokosnuss (10) positioniert ist, die in den gegenüberliegenden Backen (115) der Kokosnusshalterung (100) gehalten wird, wobei die mindestens eine Basisstützwalze (318) um eine Achse drehbar ist, um eine Drehung einer Kokosnuss (10) zu unterstützen, die in dem Paar gegenüberliegender Backen (115) gehalten wird; und
die Kokosnusshalterung (100) an der Stützstruktur (300) zwischen der Schneideeinrichtung (200) und der mindestens einen Basisstützwalze (318) über eine Halteverbindung (330) angebracht ist, wobei die Halteverbindung (330) in Bezug auf die mindestens einen Basisstützwalze (318) und die Schneideeinrichtung (200) derart beweglich ist, dass im Gebrauch die Kokosnusshalterung (100) derart positioniert ist, dass der ungefähre Mittelpunkt einer Kokosnuss (10), die in ihren Backen (115) gehalten wird, von der mindestens einen Basisstützwalze (318) gestützt wird, wenn die Schneideeinrichtung (200) in der ungefähren Mitte (151) der Kokosnuss (10) wirkt.

15. Vorrichtung nach einem der vorhergehenden Ansprüche, umfassend eine Drehstange (313), die an einem Ende mit einem Koppler (314) und an dem anderen Ende mit einem zweiten Gehäusezahnrad (216) derart verbunden ist, dass das zweite Gehäusezahnrad (216) durch die Drehstange (313) gedreht wird und sich linear entlang der Drehstange (313) bewegt.

## Revendications

1. Dispositif de coupe d'une noix de coco (10), le dispositif comprenant :
une structure de support (300) ;
un organe de maintien de noix de coco (100) installé sur la structure de support (300) et comportant une paire de mâchoires opposées (115) conçues pour maintenir les extrémités opposées d'une noix de coco (10), chaque mâchoire étant rotative autour d'un axe de façon à permettre la rotation d'une noix de coco (10) maintenue dans les mâchoires (115) ; et
un dispositif de coupe (200) installé sur la structure de support (300) et positionné pour couper une noix de coco (10) maintenue dans les mâchoires opposées (115),
**caractérisé en ce que**
le dispositif comprend un mécanisme de centrage de noix de coco servant à amener un mouvement simultané des mâchoires opposées (115) de façon à aligner le point central (151) d'une noix de coco (10) maintenue dans la paire de mâchoires opposées (115) sur l'emplacement du dispositif de coupe (200), de telle sorte que, lors de l'utilisation, le dispositif de coupe (200) agisse approximativement au niveau du point central (151) de la noix de coco (10).

2. Dispositif selon la revendication 1, dans lequel le dispositif de coupe (200) est structuré de manière à amener la rotation d'une noix de coco (10) maintenue dans la paire de mâchoires opposées (115) de l'organe de maintien de noix de coco (100) lorsqu'il agit sur la noix de coco (10).

3. Dispositif selon la revendication 2, dans lequel le dispositif de coupe (200) comprend une lame de coupe (231) et un engrenage d'entraînement (234), la lame de coupe (231) étant structurée et agencée de manière à couper à travers une noix de coco (10), et l'engrenage d'entraînement (234) étant conçu pour entrer en prise avec la surface d'une noix de coco (10) maintenue dans la paire de mâchoires opposées (115) de manière à contrôler la rotation de la noix de coco (10).

4. Dispositif selon l'une quelconque des revendications précédentes, dans lequel le dispositif de coupe (200) comprend un moyen de limitation réglable, le moyen de limitation étant structuré de manière à limiter la profondeur de pénétration du dispositif de coupe (200) dans une noix de coco (10) maintenue dans la paire de mâchoires opposées (115), de sorte que le noyau de la noix de coco (10) ne soit pas coupé et que de l'eau reste dans la noix de coco (10).

5. Dispositif selon l'une quelconque des revendications précédentes, comprenant en outre un protège-lame (240) installé sur le dispositif de coupe (200) et structuré de manière à enfermer au moins un tranchant du dispositif de coupe (200), le protège-lame (240) étant mobile par rapport au dispositif de coupe (200) de manière à permettre l'exposition du tranchant lorsqu'il est mis en contact avec une noix de coco (10) maintenue dans la paire de mâchoires opposées (115).

6. Dispositif selon la revendication 5, dans lequel le protège-lame (240) est détachable du dispositif de coupe (200) et/ou est conçu pour collecter la poussière et les débris créés lorsqu'une noix de coco (10) est coupée.

7. Dispositif selon l'une quelconque des revendications précédentes, dans lequel le dispositif de coupe (200) a une lame de coupe (231) structurée de manière à retirer la poussière et/ou les débris d'une coupe lors de sa création pendant la coupe.

8. Dispositif selon l'une quelconque des revendications précédentes, dans lequel le dispositif de coupe (200) comprend un disque rotatif ayant des dents de coupe extérieures (231al) et des dents de marquage intérieures (231a2), les dents de coupe extérieures (231al) étant conçues pour couper à travers une noix de coco (10), et les dents de marquage intérieures (231a2) étant conçues de manière à créer des encoches dans la coque d'une noix de coco 10.

9. Dispositif selon l'une quelconque des revendications précédentes, dans lequel l'organe de maintien de noix de coco (100) comprend un moyen de verrouillage conçu pour verrouiller de manière réversible les mâchoires opposées (115) dans une position de maintien, et le moyen de verrouillage comprend éventuellement un mécanisme d'encliquetage.

10. Dispositif selon l'une quelconque des revendications précédentes, dans lequel l'organe de maintien de noix de coco (100) comprend un mécanisme de libération, élastiquement sollicité de manière à amener la séparation des mâchoires opposées (115), et/ou, le mécanisme de centrage de noix de coco comprend un mécanisme à crémaillère et pignon.

11. Dispositif selon l'une quelconque des revendications précédentes, dans lequel les mâchoires opposées (115) sont formées de manière à permettre aux extrémités opposées d'une noix de coco (10) d'être visibles lorsque la noix de coco (10) est maintenue dans la paire de mâchoires opposées (115).

12. Dispositif selon l'une quelconque des revendications précédentes, dans lequel les mâchoires opposées (115) comprennent des nervures de guidage (115_1d) structurées et agencées de manière à empêcher le glissement d'une noix de coco (10) maintenue dans la paire de mâchoires opposées (115) et à faciliter l'alignement d'une noix de coco (10) dans la paire de mâchoires opposées (115).

13. Dispositif selon l'une quelconque des revendications précédentes, dans lequel l'organe de maintien de noix de coco (100) comprend un moyen de poussée adapté pour entrer en prise avec l'une des mâchoires opposées (115) de manière à pousser la mâchoire pour entrer en prise avec une noix de coco (10) maintenue dans la paire de mâchoires opposées (115).

14. Dispositif selon l'une quelconque des revendications précédentes, dans lequel la structure de support (300) comprend au moins un rouleau de support de base (318) positionné pour soutenir une noix de coco (10) maintenue dans les mâchoires opposées (115) de l'organe de maintien de noix de coco (100), l'au moins un rouleau de support de base (318) pouvant tourner autour d'un axe pour faciliter la rotation d'une noix de coco (10) maintenue dans la paire de mâchoires opposées (115) ; et
l'organe de maintien de noix de coco (100) est installé sur la structure de support (300) entre le dispositif de coupe (200) et l'au moins un rouleau de support de base (318) via une connexion à fermoir (330), la connexion à fermoir (330) étant mobile par rapport à l'au moins un rouleau de support de base (318) et le dispositif de coupe (200), de sorte que, lors de l'utilisation, l'organe de maintien de noix de coco (100) est positionné de telle sorte que le point médian approximatif d'une noix de coco (10) maintenue dans ses mâchoires (115) est soutenu par l'au moins un rouleau de support de base (318) étant donné que le dispositif de coupe (200) agit au point médian approximatif (151) de la noix de coco (10).

15. Dispositif selon l'une quelconque des revendications précédentes, comprenant une tige rotative (313), reliée à une extrémité à un coupleur (314) et à l'autre extrémité à un second carter d'engrenage (216), de sorte que le second carter d'engrenage (216) est mis en rotation par la tige rotative (313) et se déplace le long de la tige rotative (313) de façon linéaire.
